# EUROPEAN PATENT SPECIFICATION

(11) **EP 0 521 891 B1**
(45) Date of publication and mention of the grant of the patent: **25.01.1995**
(21) Application number: 91905460.1
(22) Date of filing: 12.03.1991
(51) Int. Cl.: E04B 2/74, F16B 5/06

(54) **A CONNECTING DEVICE**
BEFESTIGUNGSVORRICHTUNG
DISPOSITIF D'ASSEMBLAGE

(30) Priority: 12.03.1990 GB 9005507; 07.09.1990 GB 9019595
(43) Date of publication of application: 13.01.1993
(73) Proprietor: GNS UK LIMITED, Aldershot, Hampshire GU12 4AG (GB)
(72) Inventor: COX, Christopher, Valentine, Farnham, Surrey GU10 4AG (GB); WHALE, Luke, Richard, John, Alton, Hampshire GU34 5EP (GB); SHUTTLE, Alan, Peter, Farnham, Surrey GU9 9ED (GB); BEALE, Leonard, Michael, Surrey GU9 4JM (GB)
(74) Representative: Smith, Gillian Ruth
(86) International application number: GB9100384
(87) International publication number: WO9114057

(56) References cited:
- CA-A- 1 044 870
- FR-A- 2 434 905

## Description

The invention relates to a connecting device, particularly but not exclusively to a device for connecting cladding panels to framework to form demountable partitioning.

Some known connectors suffer from the disadvantage that the cladding panels cannot be fitted closely to the supporting framework. Other known connectors require to be fixed to the panels on site and this can result in misalignment of the connectors with respect to the framework. FR 2434905 discloses a connector having end portions in which gang nails are located but the stresses acting on the connector when in use can lead to the connector becoming dislodged from the panel.

It is an object of the present invention to provide a connector which is cheap and simple to produce and enables a panel to be fitted closely to supporting framework. It is a further object of the invention to provide a connector which can be fixedly attached to a panel in accurate alignment easily and cheaply. A further object is to provide a connector which can be used with all known systems of cladding and framework.

The invention provides a connecting device for releasably connecting a panel to a framework, comprising a substantially planar base plate and a hook member releasably connectable thereto, the base plate being fixedly attachable to the panel by means of gang nails and the hook member being adapted to releasably engage the framework, characterised in that the base plate comprises a central portion and two end portions, the said gang nails being located in the central portion and a channel being located in each of the end portions, each channel being adapted to receive one of two tongues located on the hook member. This arrangement allows accurate alignment of the base plate at any convenient time up to connection of the panel and framework, particularly during formation or immediately after formation of the panel. The hook member can be attached at any subsequent convenient time which means that the panel can be stored, transported and handled without the hook member attached. This makes storage, transportation and handling easy and economical. Preferably, all of the gang nails are located in the central portion.

Preferably, the channels are formed by pressing and each tongue may have a protruding deformation to facilitate holding of the said tongue in the respective channel. The hook member is preferably adapted so as to facilitate accurate and secure location of the panel and framework with respect to one another. Any profile that achieves a suitable locating action may be employed, but an inverted V-shaped or diamond-shaped profile is preferred to a curved profile. Particularly, the hook member may be adapted to move the panel towards the framework upon cooperation of the hook member with the framework. The arrangement enables a panel to be fitted closely, accurately and easily to the supporting framework.

In a preferred embodiment, the hook member comprises a connecting plate carrying the two said tongues, and a hooking portion projecting outwardly from the connecting plate, the hooking portion being plate-like in form.

It will be appreciated that in its preferred construction the connector lends itself to being fabricated as simple sheet metal pressings. However, the connector portions may also be fabricated by any other suitable means, such as moulding from a suitable plastics or composite material.

The invention also provides a method of releasably connecting a panel and a framework utilising a connecting device as claimed in any one of the preceding claims, comprising steps of:
(a) fixedly attaching the base plate of the connecting device to the panel either during or after formation of the panel;
(b) transporting the panel to the site of use;
(c) releasably securing the hook member to the base plate; and
(d) bringing the hook member into cooperation with the framework. Preferably, the base plate is attached to the panel before the panel is transported to the site of use.

An embodiment of the present invention will now be described with reference to the accompanying drawings wherein;
Figure 1 is a plan view of a base plate of a connecting device according to the invention;
Figure 2 is a sectional view taken along the line II-II in Figure 1;
Figure 3 is a plan view of a projection of a connecting device according to the invention;
Figure 4 is a side view of the hook member according to Figure 3; and
Figure 5 is an exploded perspective view illustrating a preferred use of the connecting device of Figures 1 to 4.

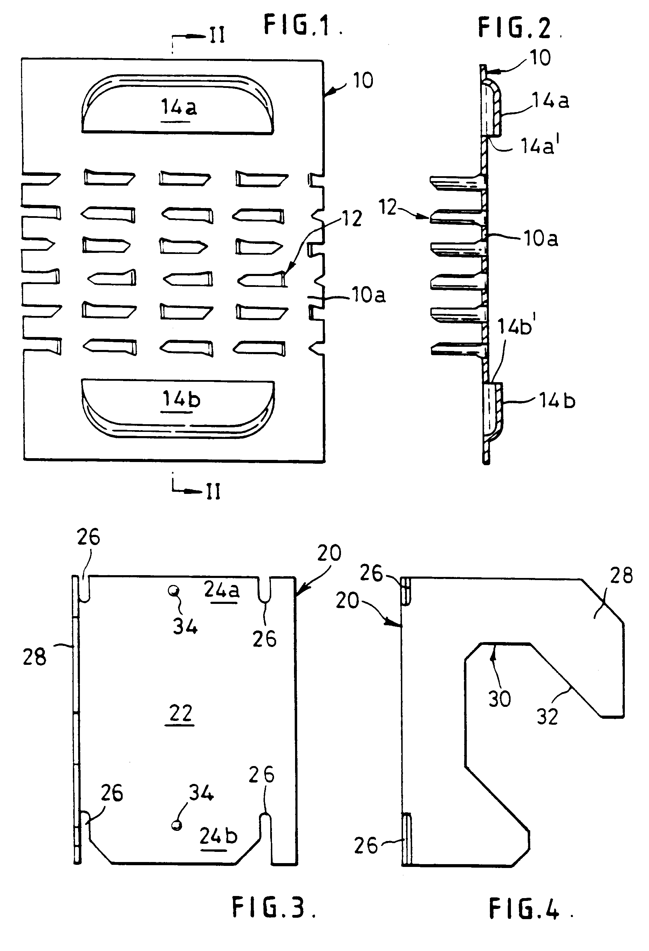

In the drawings, Figures 1 and 2 show a base plate 10 forming part of a connecting device according to the invention. The base plate 10 is generally planar and has a central section 10a which has been punched to form a series of metal prongs 12 or gang nails. These prongs 12 allow the base plate 10 to be fixedly attached to a panel, for example, a plasterboard panel.

Adjacent either end of the base plate 10 are located channels 14a and 14b. The channels 14a and 14b are formed by pressing a portion of the base plate adjacent a transverse cut therein out of the plane of the rest of the base plate 10.

Figures 3 and 4 illustrate a hook member 20 which is used in conjunction with the base plate of Figures 1 and 2. The hook member 20 consists of a connecting plate 22 having longitudinally extending tongues 24a and 24b at either end thereof. Slots 26 define the transverse edges of the tongues 24a and 24b. One side of the connecting plate is connected to a hooking portion 28 which extends perpendicularly from the connecting plate 22. The hooking portion 28 has a generally diamond-shaped recess 30 having an upper edge 32 inclined toward the connecting plate 22. The tongues 24a and 24b also carry protruding deformations 34 whose function will be described below. Both the base plate 10 and the hook member 20 are pressed from sheet steel blanks.

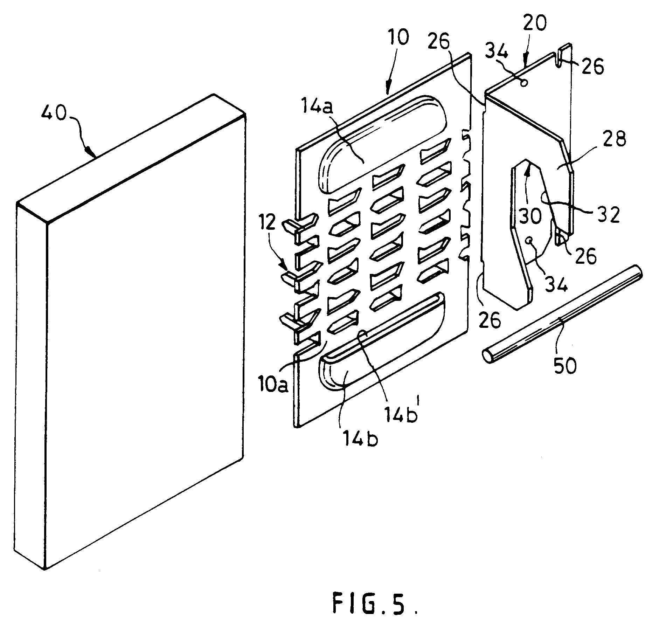

A method of utilising the connecting device described above will now be described with reference to Figure 5. It is envisaged that this type of connecting device will be utilised in the releasable connection of a cladding panel to a framework comprising horizontal tubular members. The prongs or gang nails 12 are initially forced into the inner surface of the cladding panel 40 in order to fixedly attach the base plate 10 thereto. Advantageously, this step is carried out before the cladding panel is transported to its on site location in order that accurate alignment of a series of base plates required to be attached to the panel can be carried out either during production of the panel or shortly thereafter. The base plate 10 can be affixed to the cladding panel 40 by any appropriate method. At this stage, the hook member 20 is not attached to the base plate 10 in order to facilitate transportation of the panel 40 to the on site location.

When the cladding panel 40 is required to be releasably attached to the framework, a hook member 20 is attached to the base plate, or to each base plate if more than one such plate is provided on the cladding panel. This is carried out by inserting the lower tongue 24b fully into the lower channel 14b and subsequently inserting the upper tongue 24 a into the upper channel 14a. It will be noted that the upper tongue 24a is of a shorter length than the tongue 24b. The relative lengths are such that, when the upper tongue 24a is fully inserted into the upper channel 14a, the lower tongue 24b remains engaged with the lower channel 14b. Only by inserting the lower tongue 24b fully into the lower channel 14b can the hook member 20 be removed from the base plate 10. The slots 26 are engaged with the walls of the channels 14a and 14b when the hook member portion 20 is connected to the base plate 10 to reduce lateral play of the tongues 24a and 24b in the channels 24a and 24b.

The channels 14a and 14b have openings 14a' and 14b' which are marginally wider than the width of the material of the tongues 24a and 24b. The protruding deformations reduce the amount of play between the tongues 24a and 24b and the channels 14a and 14b.

Once the hook member 20 has been connected to the base plate, the substantially diamond-shaped recess 30 can be used as locating means to locate the cladding panel 40 on the supporting framework 50. The inclined surface 32 encourages the framework 50 to be located at the upper end of the recess 30 or until the panel 40 abuts vertical portions of the framework without further guiding means being necessary. The weight of the cladding panel 40 maintains the upper tongue 24a of the hook member 20 in an uppermost position in the upper channel 14a of the base plate 10 wherein the base plate 10 and the hook member 20 cannot become detached.

Clearly, it is a simple matter for the cladding panel 40 to be removed from the framework 50 for any reason whatsoever, for example, to provide access to a void in the partition to allow the installation or maintainance of services such as electrical or data wiring or to relocate the entire partition. The panel merely has to be lifted so as to disengage the hook member 20 from the framework 50 and the panel 40 becomes freely moveable. However, this releasing of the panel does not in any way render useless the components of the connecting device. The panel 40, base plate 10 and hook member 20 can be re-used elsewhere as desired.

The above described embodiment is not intended to be limitative. For example, the channels may be arranged longitudinally of the base plate or at any other convenient angle.

It is also envisaged that more than one hooking portion could be provided on the connector plate. For example, a second hooking portion 28 could be provided on the right side of the connector plate as viewed in Figure 3. This would be advantageous when the panel to be supported is particularly massive or likely to be put under considerable loading. Alternatively, separate interengaging means could be provided on the base plate for receiving a second hook member.

A connecting device according to the present invention is not limited in its application to connecting cladding panels to a framework. Many other uses are envisaged in any situation where an object is desired to be connected to another object in a releasable manner. Also, the design of the hooking portion can be varied so as to provide other types of connection. A sprung clip could, for example, be incorporated into the projection.

## Claims

1. A connecting device for releasably connecting a panel to a framework, comprising a substantially planar base plate (10) and a hook member (20) releasably connectable thereto, the base plate (10) being fixedly attachable to the panel by means of gang nails (12) and the hook member (20) being adapted to releasably engage the framework, characterised in that the base plate (10) comprises a central portion (10a) and two end portions, the said gang nails (12) being located in the central portion (10a) and a channel (14a,14b) being located in each of the end portions, each channel (14a,14b) being adapted to receive one of two tongues (24a,24b) located on the hook member (20).

2. A connecting device as claimed in claim 1, wherein the channels (14a,14b) are formed by pressing.

3. A connecting device as claimed in claim 1 or 2, wherein each tongue (24a,24b) has a protruding deformation (34) to facilitate holding of the said tongue (24a,24b) in the respective channel (14a,14b).

4. A connecting device as claimed in any one of claims 1 to 3, wherein the hook member (20) is adapted to move the panel towards the framework upon cooperation of the hook member (20) with the framework (50).

5. A connecting device as claimed in any one of the preceding claims, wherein the hook member (20) comprises a connecting plate (22) carrying the two said tongues (24a,24b), and a hooking portion (28) projecting outwardly from the connecting plate (22), the hooking portion (28) being plate-like in form.

6. A method of releasably connecting a panel and a framework utilising a connecting device as claimed in any one of the preceding claims, comprising steps of:
(a) fixedly attaching the base plate (10) of the connecting device to the panel either during or after formation of the panel;
(b) transporting the panel to the site of use;
(c) releasably securing the hook member (20) to the base plate (10); and
(d) bringing the hook member (20) into cooperation with the framework.

7. A method as claimed in claim 6, wherein the base plate (10) is attached to the panel before the panel is transported to the site of use.

## Patentansprüche

1. Verbindungsstück zur lösbaren Verbindung einer Platte mit einem Skelett, das eine im wesentlichen plane Grundplatte (10) und ein Hakenelement (20) aufweist, das lösbar mit dieser verbunden werden kann, wobei die Grundplatte (10) mit Hilfe von Mehrfachnägeln (12) fest an der Platte angebracht werden kann und das Hakenelement (20) lösbar in das Skelett eingreifen kann, dadurch gekennzeichnet, daß die Grundplatte (10) einen mittleren Abschnitt (10a) und zwei Endabschnitte aufweist, wobei sich die Mehrfachnägel (12) im mittleren Abschnitt (10a) befinden, und wobei in jedem der Endabschnitte eine Auskehlung (14a, 14b) vorhanden ist, wobei jede Auskehlung (14a, 14b) eine von zwei Zungen (24a, 24b) aufnehmen kann, die sich an dem Hakenelement (20) befinden.

2. Verbindungsstück nach Anspruch 1, bei dem die Auskehlungen (14a, 14b) durch Pressen hergestellt werden.

3. Verbindungsstück nach Anspruch 1 oder 2, bei dem jede Zunge (24a, 24b) eine vorstehende Verformung (34) hat, um das Halten der Zunge (24a, 24b) in der jeweiligen Auskehlung (14a, 14b) zu erleichtern.

4. Verbindungsstück nach einem der Ansprüche 1 bis 3, bei dem das Hakenelement (20) die Platte beim Zusammenwirken des Hakenelementes (20) mit dem Skelett (50) zum Skelett hin bewegen kann.

5. Verbindungsstück nach einem der vorstehenden Ansprüche, bei dem das Hakenelement (20) eine Verbindungsplatte (22), welche die beiden Zungen (24a, 24b) trägt, und einen Hakenabschnitt (28) aufweist, der von der Verbindungsplatte (22) nach außen vorsteht, wobei der Hakenabschnitt (28) eine plattenartige Form hat.

6. Verfahren zur lösbaren Verbindung einer Platte und eines Skeletts unter Anwendung eines Verbindungsstücks nach einem der vorstehenden Ansprüche, das die folgenden Schritte aufweist:
(a) feste Anbringung der Grundplatte (10) des Verbindungsstücks an der Platte entweder während oder nach der Herstellung der Platte;
(b) Transport der Platte zum Nutzungsort;
(c) lösbare Befestigung des Hakenelementes (20) an der Grundplatte (10); und
(d) Bringen des Hakenelementes (20) zum Zusammenwirken mit dem Skelett.

7. Verfahren nach Anspruch 6, bei dem die Grundplatte (10) an der Platte angebracht wird, bevor die Platte zum Nutzungsort transportiert wird.

## Revendications

1. Dispositif d'assemblage permettant l'assemblage amovible d'un panneau à une charpente, comprenant une plaque de base pratiquement plane (10) et un élément de crochet (20) pouvant y être assemblé et en être enlevé, la plaque de base (10) pouvant être fixée fermement au panneau par l'intermédiaire de clous groupés (12) et l'élément de crochet (20) pouvant s'engager dans la charpente et s'en dégager, caractérisé en ce que la plaque de base (10) comprend une partie centrale (10a) et deux parties d'extrémité, lesdits clous groupés (12) étant disposés dans la partie centrale (10a) et un canal (14a, 14b) étant agencé dans chacune des parties d'extrémité, chaque canal (14a, 14b) étant destiné à recevoir l'une de deux languettes (24a, 24b) agencées sur l'élément de crochet (20).

2. Dispositif d'assemblage selon la revendication 1, dans lequel les canaux (14a, 14b) sont formés par pressage.

3. Dispositif d'assemblage selon les revendications 1 ou 2, dans lequel chaque languette (24a, 24b) comporte une déformation en saillie (34) pour faciliter le maintien de ladite languette (24a, 24b) dans le canal respectif (14a, 14b).

4. Dispositif d'assemblage selon l'une quelconque des revendications 1 à 3, dans lequel l'élément de crochet (20) est destiné à déplacer le panneau en direction de la charpente lors de la coopération du moyen de crochet (20) avec la charpente (50).

5. Dispositif d'assemblage selon l'une quelconque des revendications précédentes, dans lequel l'élément de crochet (20) comprend une plaque de raccord (22) supportant lesdites deux languettes (24a, 24b), ainsi qu'une partie d'accrochage (28) débordant vers l'extérieur à partir de la plaque de raccord (22), la partie d'accrochage (28) ayant une forme en plaque.

6. Procédé d'assemblage amovible d'un panneau et d'une charpente, par l'intermédiaire d'un dispositif d'assemblage selon l'une quelconque des revendications précédentes, comprenant les étapes suivantes:
(a) fixation ferme de la plaque de base (10) du dispositif d'assemblage au panneau, ou bien pendant ou bien après la production du panneau;
(b) transport du panneau sur le lieu d'utilisation;
(c) fixation amovible de l'élément de crochet (20) à la plaque de base (10); et
(d) établissement d'une coopération entre l'élément de crochet (20) et la charpente.

7. Procédé selon la revendication 6, dans lequel la plaque de base (10) est fixée au panneau avant le transport du panneau sur le lieu d'utilisation.
